# EUROPÄISCHE PATENTSCHRIFT

(11) **EP 1 162 052 B1**
(45) Veröffentlichungstag und Bekanntmachung des Hinweises auf die Patenterteilung: **13.08.2003**
(21) Anmeldenummer: 01110951.9
(22) Anmeldetag: 07.05.2001
(51) Int. Cl.: B29C 45/17

(54) **Spritzgiessmaschine**
Injection moulding machine
Machine à mouler par injection

(30) Priorität: 08.06.2000 AT 4252000
(43) Veröffentlichungstag der Anmeldung: 12.12.2001
(73) Patentinhaber: ENGEL MASCHINENBAU GESELLSCHAFT MBH, A-4311 Schwertberg (AT)
(72) Erfinder: Voggeneder, Johann, 4310 Mauthausen (AT); Gruber, Herbert, 4230 Pregarten (AT)
(74) Vertreter: Hofinger, Engelbert, Dr.Dr.

(56) Entgegenhaltungen:
- EP-A- 0 055 464
- EP-A- 0 652 095
- PATENT ABSTRACTS OF JAPAN vol. 2000, no. 12, 3. Januar 2001 (2001-01-03) -& JP 2000 254940 A (SUMITOMO HEAVY IND LTD), 19. September 2000 (2000-09-19)

## Beschreibung

Die Erfindung bezieht sich auf eine Spritzgießmaschine mit einer feststehenden und einer beweglichen Formaufspannplatte zur Befestigung mindestens je einer Formhälfte, wobei in einer der Formaufspannplatten eine Einspritzeinrichtung mündet, vgl. z.B. die EP-A- 55464.

Beim Betrieb von Spritzgießmaschinen sind derzeit Vorkehrungen getroffen, welche die Betätigung der Spritzeinheit bei offener Form verhindern, damit kein Spritzgut ins Freie tritt und dort Verunreinigungen oder Unfälle verursachen kann. Für das Ausspritzen der zur Form führenden Kanäle zum Zweck der Reinigung oder zum Entformen des erstarrten Kunststoffes nach Produktionsunterbrechung ist das Schließen der Form eine lästige Bedingung, da es den Reinigungsvorgang an die volle Funktionsfähigkeit der Schließseite knüpft. Außerdem kann beim Ausspritzvorgang die Form beschädigt werden.

Erfindungsgemäß ist daher vorgesehen, daß die einspritzseitige Formhälfte bei geöffneter Form durch eine Auffangtasse abdeckbar ist. Dies stellt sicher, daß Reinigungsmaterial bzw. flüssiger oder erstarrter Kunststoff nicht ungewollt nach außen gelangen können.

Weitere Ansgestaltungen des Erfindung sind in dem abhängigen Ansprüchen dargestellt.

Einzelheiten der Erfindung werden anschließend anhand der Zeichnungen erläutert. In dieser ist
Fig. 1 eine Vorderansicht einer (vertikalen) Spritzgießmaschine,
Fig. 2 ein Ausschnitt aus Fig. 1 unter Hinzufügen der erfindungsgemäßen Auffangtasse,
Fig. 3 eine vergrößerte Vorderansicht der erfindungsgemäßen Auffangtasse

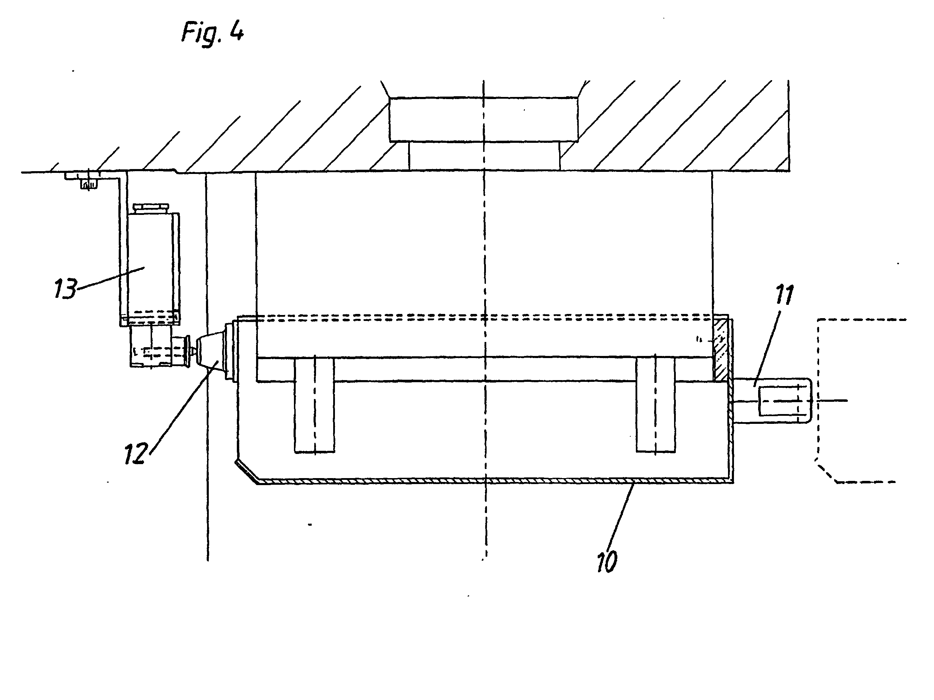

Fig. 4 die entsprechende Seitenansicht teilweise im Schnitt.

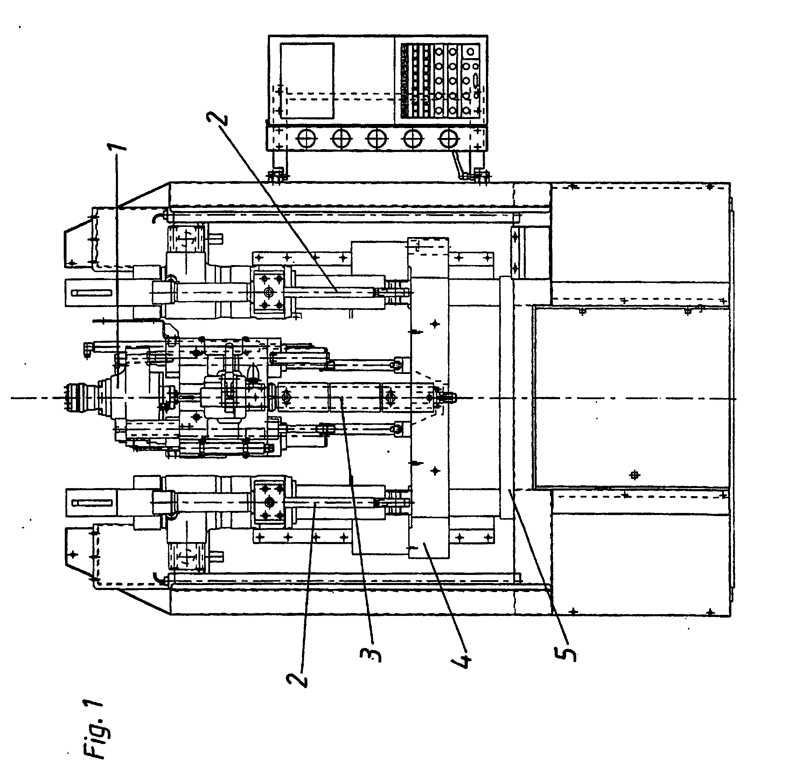

In Fig. 1 ist eine Spritzgießmaschine dargestellt, bei welcher die Erfindung zur Anwendung kommen kann. Sie weist eine feststehende Formaufspannplatte 5 auf. Eine bewegliche Formaufspannplatte 4 ist mittels Schließzylinder 2 verschiebbar wodurch eine in Fig. 1 nicht dargestellte Form geöffnet und geschlossen werden kann. Ein Einspritzaggregat 1 dient dazu, im Zylinder 3 plastifizierten Kunststoff durch die bewegliche Formaufspannplatte 4 in die Form einzuspritzen.

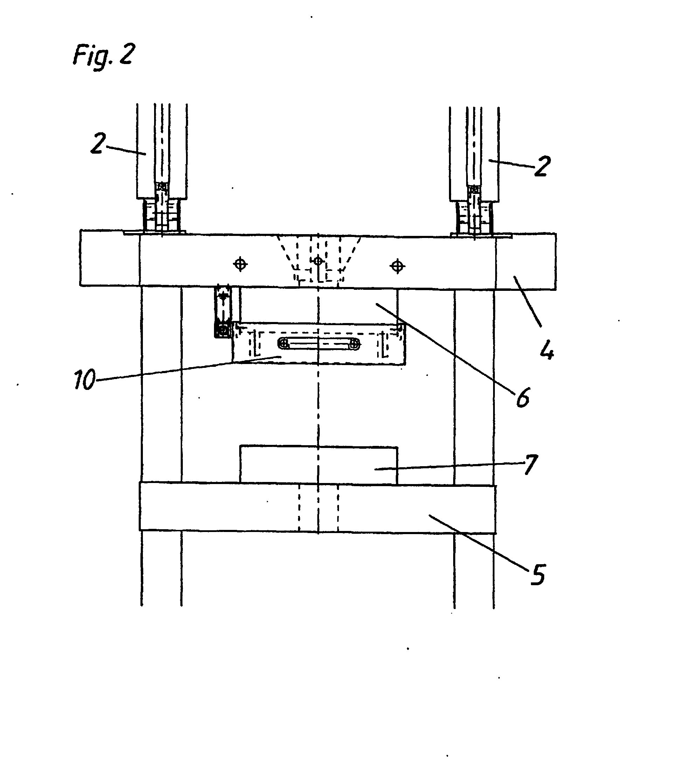

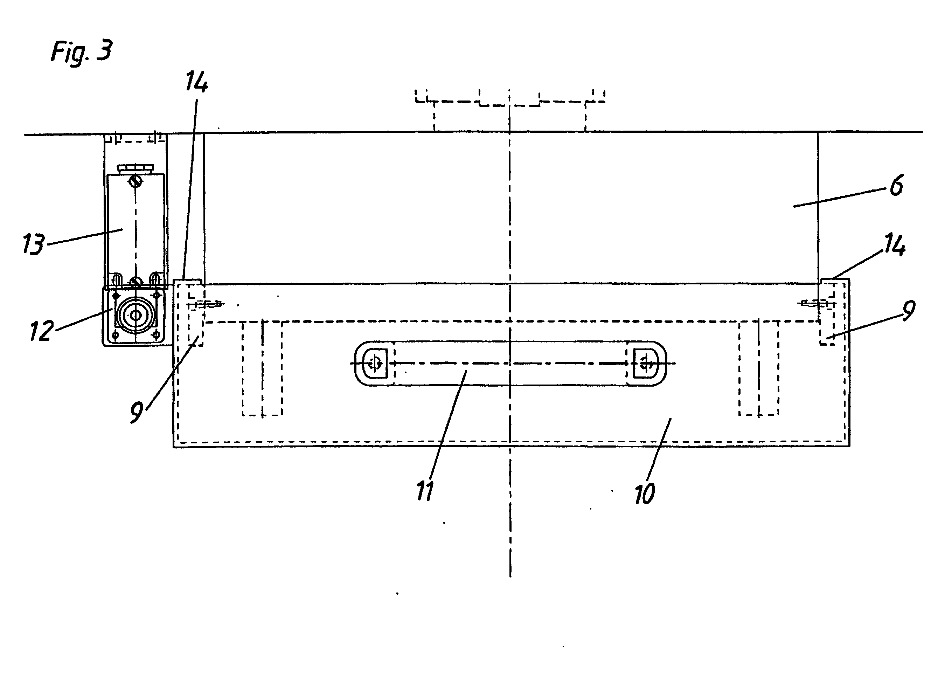

In Fig. 2 ist die Einrichtung mit einer oberen Formhälfte 6 und einer unteren Formhälfte 7 bei geöffneter Form dargestellt. Soll eine Ausspritzung der Kanäle in die bewegliche Formaufspannplatte 4 bzw. die Formhälfte 6 erfolgen, so wird die Formhälfte 6 mit einer Auffangtasse 10 verschlossen. Diese ist, wie aus Fig. 3 deutlich hervorgeht, mit einem abgekanteten oberen Rand 14 versehen, welcher an der Formhälfte befestigte Führungsleisten 9 umgreift. Ein Griff 11 dient dazu, die Auffangtasse 10 nach Art einer Schublade einzuschieben oder zu entfernen. Am hinteren Ende einer Seitenwand der Auffangtasse 10 ist ein Anschlag 12 vorgesehen, der bei völlig eingeschobener Auffangtasse 10 einen Endschalter 13 betätigt. Dies ist die Bedingung dafür, daß bei geöffneter Form eine Einspritzung erfolgen kann. Die dabei austretende Reinigungsflüssigkeit wird von der Auffangtasse 10 aufgefangen und kann mit dieser entfernt werden.

## Patentansprüche

1. Spritzgießmaschine mit einer feststehenden und einer beweglichen Formaufspannplatte zur Befestigung mindestens je einer Formhälfte, wobei in einer der Formaufspannplatten eine Einspritzeinrichtung mündet, **dadurch gekennzeichnet, daß** die einspritzseitige Formhälfte (6) bei geöffneter Form durch eine Auffangtasse (10) abdeckbar ist.

2. Spritzgießmaschine nach Anspruch 1, **dadurch gekennzeichnet, daß** die Betätigung der Einspritzeinrichtung bei offener Form durch ein Signal bedingt ist, welches die korrekte Schließstellung der Auffangtasse 10 anzeigt.

3. Spritzgießmaschine nach einem der Ansprüche 1 oder 2, **dadurch gekennzeichnet, daß** die Auffangtasse (10) nach Art einer Schublade an Führungsleisten (9) verschiebbar ist, welche an der einspritzseitigen Formhälfte (6) oder der dazugehörigen Formaufspannplatte (4) befestigt sind.

4. Spritzgießmaschine nach einem der Ansprüche 2 oder 3, **dadurch gekennzeichnet, daß** die Auffangtasse (10) in Schließstellung einen Endschalter (13) betätigt.

## Claims

1. An injection moulding machine comprising a stationary mould mounting plate and a movable mould mounting plate for fixing at least one respective mould half, wherein an injection device opens in one of the mould mounting plates, **characterised in that** when the mould is open the mould half (6) at the injection side can be covered by a catch cup (10).

2. An injection moulding machine according to claim 1 **characterised in that** actuation of the injection device when the mould is open is governed by a signal which displays the correct closed position of the catch cup (10).

3. An injection moulding machine according to one of claims 1 and 2 **characterised in that** the catch cup (10) is displaceable in the manner of a drawer on guide bars (9) which are fixed to the mould half (6) at the injection side or the associated mould mounting plate (4).

4. An injection moulding machine according to one of claims 2 and 3 **characterised in that** the catch cup (10) actuates a limit switch (13) in the closed position.

## Revendications

1. Machine à mouler par injection avec un plateau porte-moule fixe et un plateau porte-moule mobile pour la fixation, respectivement, d'au moins un demi-moule, un dispositif d'injection débouchant dans l'un des plateaux porte-moule, **caractérisée en ce qu'**il est possible de recouvrir le demi-moule (6), situé du côté de l'injection, lorsque le moule est ouvert, au moyen d'un récipient collecteur (10).

2. Machine à mouler par injection selon la revendication 1, **caractérisée en ce que** l'actionnement du dispositif d'injection, moule ouvert, est conditionné par un signal, lequel indique la position de fermeture correcte du récipient collecteur (10).

3. Machine à mouler par injection selon l'une des revendications 1 ou 2, **caractérisée en ce qu'**il est possible de déplacer le récipient collecteur (10), à mode de tiroir, sur des coulisses (9), lesquelles sont fixées au demi-moule (6), situé du côté de l'injection, ou au plateau porte-moule (4) relatif.

4. Machine à mouler par injection selon l'une des revendications 2 ou 3, **caractérisée en ce que** le récipient collecteur (10) actionne, en position de fermeture, un commutateur de fin de course (13).
